# EUROPÄISCHE PATENTSCHRIFT

(11) **EP 4 072 304 B1**
(45) Veröffentlichungstag und Bekanntmachung des Hinweises auf die Patenterteilung: **05.03.2025**
(21) Anmeldenummer: 20838364.6
(22) Anmeldetag: 09.12.2020
(51) Int. Cl.: A23G 3/34, A23G 3/38, A23G 3/42, A23L 33/20, A61K 9/20

(54) **VERFAHREN ZUR HERSTELLUNG EINER EINE TREHALULOSE-HALTIGE ZUSAMMENSETZUNG ENTHALTENDEN HARTKARAMELLE**
METHOD FOR PRODUCING A HARD CARAMEL CONTAINING A TREHALULOSE-CONTAINING COMPOSITION
PROCÉDÉ DE PRÉPARATION D'UN CARAMEL DUR CONTENANT UNE COMPOSITION QUI CONTIENT DU TRÉHALOSE

(30) Priorität: 11.12.2019 DE 102019219323
(43) Veröffentlichungstag der Anmeldung: 19.10.2022
(73) Patentinhaber: Südzucker AG, 68165 Mannheim (DE)
(72) Erfinder: WILLIBALD-ETTLE, Ingrid, 76829 Landau (DE); RICHFIELD, David, 67549 Worms (DE); WILLFAHRT, Jörg, 67590 Monsheim (DE); LUTZ, Christina, 5073 Gipf-Oberfrick (CH); PLACE, Raymond, 4059 Basel (CH)
(74) Vertreter: Schrell, Andreas
(86) Internationale Anmeldenummer: PCT/EP2020/085308
(87) Internationale Veröffentlichungsnummer: WO 2021/116184

(56) Entgegenhaltungen:
- EP-A1- 1 864 670
- EP-A2- 0 348 696
- EP-B1- 0 348 696
- WO-A1-2006/119991
- WO-A1-2018/138666
- DE-A1- 102008 027 686
- JP-A- H0 889 175
- JP-A- S62 257 346
- JP-A- S63 309 144
- US-A1- 2010 267 658
- US-B1- 6 180 152

## Beschreibung

Die vorliegende Erfindung betrifft ein Verfahren zur Herstellung einer eine Trehalulose-haltige Zusammensetzung enthaltenden Hartkaramelle sowie eine nach diesem Verfahren hergestellte Hartkaramelle.

Gegenwärtig befinden sich zahlreiche verschiedene zuckerhaltige und zuckerfreie Hartkaramellen in unterschiedlichster Form auf dem Markt. Das steigende Interesse in der Bevölkerung an zuckerfreien Alternativen zu üblichen Hartkaramellen bei gleichzeitiger Beibehaltung des Aussehens, der Haltbarkeit und des Mundgefühls solcher Hartkaramellen führte in den letzten Jahren zur Entwicklung einer Vielzahl von Zuckerersatzstoffe enthaltenden Hartkaramellen.

Vitalose^{®} ist ein hauptsächlich aus den beiden Disacchariden Trehalulose (1-O-α-D-Glucopyranosyl-D-Fructose) und Isomaltulose (6-O-α-D-Glucopyranosyl-D-Fructose) aufgebauter süßer, transparenter Sirup mit einem milden zuckerartigen Süsseprofil ohne jegliche Fehlgeschmäcke oder Fehlfarben. Vitalose^{®} zeichnet sich zudem durch einen niedrigen glykämischen Index (GI) aus. Die in Vitalose^{®} enthaltene Trehalulose führt beim Konsum zu einer ähnlichen Blutzuckerreaktion wie die ebenfalls enthaltene Isomaltulose, resultiert jedoch in einer geringeren Insulinfreisetzung. Neben dem im Vergleich zu Saccharose verringerten glykämischen Index (GI) und der verringerten Insulinfreisetzung stellen die in Vitalose^{®} enthaltenen Zuckerersatzstoffe Isomaltulose und Trehalulose die in den Molekülen enthaltene Energie gleichmäßiger und über einen längeren Zeitraum zur Verfügung.

Aufgrund seiner Sirup-artigen Konsistenz und Saccharose-ähnlicher Hygroskopizität lässt sich Vitalose^{®} allerdings nicht in jedem Fall problemlos zu Hartkaramellen Das Dokument US2010/267658 offenbart ein Verfahren zur Herstellung von einer eine Trehalulose-haltige Zusammensetzung enthaltende Hartkaramelle.

Nach wie vor besteht jedoch ein Bedarf an sowohl geschmacklich, organoleptisch als auch optisch attraktiver und insbesondere auch bestimmten Konsumentenprofilen entsprechenden weiteren Hartkaramellen, insbesondere solchen, die gesundheitliche Vorteile mit einer hohen Lagerstabilität verbinden.

Die vorliegende Erfindung löst das ihr zugrunde liegende Problem durch den Gegenstand der unabhängigen Ansprüche.

Die vorliegende Erfindung betrifft insbesondere ein Verfahren zur Herstellung einer eine Trehalulose-haltige Zusammensetzung enthaltenden Hartkaramelle, umfassend die Schritte:
a) Bereitstellung eines wässrigen Mediums, enthaltend eine Trehalulose-haltige Zusammensetzung in einer Menge von 50 bis 100 Gew.-% (bezogen auf die Gesamttrockensubstanz), umfassend 5 bis 50 Gew.-% Isomaltulose und 20 bis 95 Gew.-% Trehalulose (jeweils bezogen auf die Trockensubstanz der Trehalulose-haltigen Zusammensetzung),
b) Anlegen eines reduzierten Drucks von höchstens 0,4 bar unter Durchmischung bei einer Temperatur von höchstens 135 °C, insbesondere höchstens 130 °C,
c) Abkühlen des wässrigen Mediums auf eine Temperatur von 70 bis 90 °C bei atmosphärischem Druck zum Erhalt einer plastischen Masse und
d) Formen der in Schritt c) erhaltenen plastischen Masse und Erhalten einer eine Trehalulose-haltigen Zusammensetzung enthaltenden Hartkaramelle.

Das erfindungsgemäße Verfahren zur Herstellung einer eine Trehalulose-haltige Zusammensetzung enthaltenden Hartkaramelle sieht somit vor, zunächst ein wässriges Medium bereitzustellen, das eine Trehalulose-haltige Zusammensetzung in einer Menge von 50 bis 100 Gew.-%, insbesondere 50 bis 98 Gew.-% (jeweils bezogen auf die Gesamttrockensubstanz des wässrigen Mediums) umfasst, wobei die Trehalulose-haltige Zusammensetzung Isomaltulose in einer Menge von 5 bis 50 Gew.-% und Trehalulose in einer Menge von 20 bis 95 Gew.-% (jeweils bezogen auf die Trockensubstanz der Trehalulose-haltigen Zusammensetzung) enthält. In besonders bevorzugter Ausführungsform ist das wässrige Medium eine wässrige Lösung oder ein wässriger Sirup. In einer besonders bevorzugten Ausführungsform ist das wässrige Medium eine wässrige Lösung. In einer besonders bevorzugten Ausführungsform ist das wässrige Medium ein wässriger Sirup.

An das in Schritt a) bereitgestellte eine Trehalulose-haltige Zusammensetzung enthaltende wässrige Medium wird anschließend ein reduzierter Druck von höchstens 0,4 bar bei einer Temperatur von höchstens 135 °C angelegt. Dabei erfolgt das Anlegen des reduzierten Drucks an das wässrige Medium unter Durchmischung, wobei die Durchmischung durch jegliche dem Fachmann bekannte geeignete Mittel zur Durchmischung wässriger Medien erfolgen kann. Besonders bevorzugt erfolgt die Durchmischung kontinuierlich. Im Anschluss erfolgt in Schritt c) ein Abkühlen des wässrigen Mediums auf eine Temperatur von 70 bis 90 °C bei atmosphärischem Druck, wodurch eine plastische Masse erhalten wird. Schließlich wird die in Schritt c) erhaltene plastische Masse in Schritt d) zu einer eine Trehalulose-haltige Zusammensetzung enthaltenden Hartkaramelle geformt, insbesondere gegossen oder geprägt, insbesondere geprägt.

Die erfindungsgemäß bereitgestellte Verfahrensweise erlaubt die Herstellung von besonders gut prägefähiger plastischer Masse, aus der sich Hartkaramellen herstellen lassen, die sich durch einen verbesserten Geschmack, ein attraktives optisches Äußeres, insbesondere eine attraktive gold-gelbe Färbung und die vorteilhafte gesundheitlich fördernd wirkende Zusammensetzung aus einer Trehalulose-haltigen Zusammensetzung auszeichnen.

Die vorliegende Erfindung erlaubt es in überraschender Weise vorteilhaft in einem einfachen und kostengünstigen Verfahren aus einer Trehalulose-haltigen Zusammensetzung, insbesondere Vitalose^{®}, eine vorteilhafte Hartkaramelle herzustellen.

Ohne an die Theorie gebunden zu sein, führt das erfindungsgemäße Verfahren zu einer hohen Wiederfindung der Trehalulose-haltigen Zusammensetzung, insbesondere der Trehalulose, welche in dem in Verfahrensschritt a) bereitgestellten wässrigen Medium vorhanden war, in der in Verfahrensschritt d) erhaltenen, eine Trehalulose-haltigen Zusammensetzung enthaltenden Hartkaramelle.

In einer besonders bevorzugten Ausführungsform weist das in Schritt a) bereitgestellte wässrige Medium, insbesondere die wässrige Lösung oder der wässrige Sirup, einen Trockensubstanzgehalt von 20 bis 80 Gew.-%, insbesondere 30 bis 70 Gew.-%, insbesondere 40 bis 65 Gew.-%, insbesondere 45 bis 65 Gew.-% (jeweils bezogen auf die Gesamtmasse des wässrigen Mediums, insbesondere der wässrigen Lösung oder des wässrigen Sirups) auf.

In einer bevorzugten Ausführungsform der vorliegenden Erfindung weist das in Schritt a) bereitgestellte wässrige Medium, insbesondere die wässrige Lösung oder der wässrige Sirup, eine Trehalulose-haltige Zusammensetzung in einer Menge von 50 bis 100 Gew.-%, insbesondere 50 bis 98 Gew.-% (jeweils bezogen auf die Gesamttrockensubstanz des wässrigen Mediums, insbesondere der wässrigen Lösung oder des wässrigen Sirups), umfassend 15 bis 25 Gew.-% Isomaltulose und 75 bis 85 Gew.-% Trehalulose (jeweils bezogen auf die Trockensubstanz der Trehalulose-haltigen Zusammensetzung) auf.

In einer weiteren bevorzugten Ausführungsform der vorliegenden Erfindung weist das in Schritt a) bereitgestellte wässriges Medium, insbesondere die wässrige Lösung oder der wässrige Sirup, eine Trehalulose-haltige Zusammensetzung in einer Menge von 50 bis 100 Gew.-%, insbesondere 50 bis 98 Gew.-% (jeweils bezogen auf die Gesamttrockensubstanz) auf, wobei die Trehalulose-haltige Zusammensetzung Trehalulose und Isomaltulose in einem Mengenverhältnis (Gew.-%) von 3:1 bis 5:1, bevorzugt 3,5:1 bis 4,5:1, bevorzugt 4:1, aufweist.

In einer bevorzugten Ausführungsform enthält das in Schritt a) bereitgestellte wässrige Medium, insbesondere die wässrige Lösung oder der wässrige Sirup, Trehalulose in einer Menge von 70 bis 85 Gew.-%, insbesondere 75 bis 85 Gew.-% und Isomaltulose in einer Menge von 15 bis 30 Gew.-%, insbesondere 15 bis 25 Gew.-% (jeweils bezogen auf die Trockensubstanz des Mediums, insbesondere der Lösung oder des Sirups).

Bevorzugt handelt es sich bei der Trehalulose-haltige Zusammensetzung um Vitalose^{®}. Besonders bevorzugt handelt es sich bei der Trehalulose-haltige Zusammensetzung um eine in der WO 2010/118866 A1 beschriebene Trehalulose-haltige Zusammensetzung, insbesondere um eine gemäß der in der WO 2010/118866 A1 offenbarten Verfahren hergestellte Trehalulose-haltige Zusammensetzung. Bevorzugt handelt es sich um eine Zusammensetzung, insbesondere Vitalose^{®}, enthaltend Isomaltulose in einer Menge von 5 bis 50 Gew.-% und Trehalulose in einer Menge von 20 bis 95 Gew.-% (jeweils bezogen auf die Trockensubstanz der Trehalulose-haltigen Zusammensetzung, insbesondere Vitalose^{®}).

Insbesondere wird unter einer Trehalulose-haltigen Zusammensetzung im Zusammenhang mit der vorliegenden Erfindung eine durch enzymatisch katalysierte Isomerisierung von Saccharose-haltigen Zusammensetzungen erhaltene hauptsächlich Trehalulose-haltige Zusammensetzung verstanden, insbesondere erhalten unter Einsatz von *Pseudomonas mesoacidophila.*

In einer besonders bevorzugten Ausführungsform kann das wässrige Medium eine aus einer enzymatischen Umsetzung von Saccharose-haltigen Lösungen, insbesondere eine aus enzymatisch katalysierter Isomerisierung von Saccharose-haltigen Zusammensetzungen, insbesondere unter Einsatz von *Pseudomonas mesoacidophila,* erhaltene Zusammensetzung sein, insbesondere ein unmittelbar aus einer enzymatischen Umsetzung resultierendes Reaktionsgemisch, vorzugsweise nach gegebenenfalls erfolgender Aufreinigung unter Einsatz von zum Beispiel Ionenaustauschern und/oder Invertasebehandlungen.

In einer Ausführungsform der vorliegenden Erfindung ist daher das in Frage stehende bereitgestellte wässrige Medium ein wässriges Medium, das unmittelbar nach einer enzymkatalysierten Saccharose-Isomerisierung einer Saccharose-haltigen Zusammensetzung zu einer Trehalulose-haltigen Zusammensetzung erhalten wird. In weiteren Ausführungsformen kann einem solchen wässrigen Medium, das eine Trehalulose-haltige Zusammensetzung aufweist, mindestens ein Zusatz- oder Hilfsstoff hinzugefügt werden.

In einer besonders bevorzugen Ausführungsform weist eine Trehalulose-haltige Zusammensetzung neben Trehalulose und Isomaltulose auch weitere aus der genannten enzymatischen Umsetzung stammende Zucker, insbesondere Monomere, Dimere und Oligomere auf, insbesondere Fructose, Glucose, Isomelezitose, Saccharose, Turanose, Leucrose, Isomaltose und/oder Raffinose.

In besonders bevorzugter Ausführungsform ist die Trehalulose-haltige Zusammensetzung eine Zusammensetzung, umfassend 81 Gew.-% Trehalulose und 17 Gew.-% Isomaltulose sowie mindestens einen der weiteren vorgenannten Zucker (bezogen auf Gesamttrockensubstanz der Trehalulose-haltigen Zusammensetzung).

In einer weiteren bevorzugten Ausführungsform der vorliegenden Erfindung wird das in Schritt a) bereitgestellte wässrige Medium, insbesondere die wässrige Lösung oder der wässrige Sirup, vor Schritt b) in einem Verfahrensschritt a1) auf eine Temperatur von höchstens 100 °C erhitzt. Besonders bevorzugt wird das in Schritt a) bereitgestellte wässrige Medium, insbesondere die wässrige Lösung oder der wässrige Sirup, vor Schritt b) in einem Verfahrensschritt a1) auf eine Temperatur von 80 bis 100 °C, bevorzugt 85 bis 95 °C, erhitzt.

Bevorzugt erfolgt das Erhitzen des in Schritt a) bereitgestellten wässrigen Mediums, insbesondere der wässrigen Lösung oder der wässrige Sirup, vor Schritt b) in einem Verfahrensschritt a1) unter atmosphärischem Druck.

In einer bevorzugten Ausführungsform der vorliegenden Erfindung beträgt in Schritt b) die Temperatur 120 bis 135 °C, bevorzugt 125 bis 135 °C.

In einer bevorzugten Ausführungsform der vorliegenden Erfindung liegt der Druck in Schritt b) in einem Bereich von 0,1 bis 0,4 bar, bevorzugt 0,15 bis 0,4 bar, bevorzugt 0,2 bis 0,4 bar, bevorzugt 0,25 bis 0,4 bar, bevorzugt 0,3 bis 0,4 bar.

Bevorzugt beträgt der Druck in Schritt b) höchstens 0,38 bar, bevorzugt höchstens 0,36 bar, bevorzugt höchstens 0,34 bar, bevorzugt höchstens 0,32 bar, bevorzugt höchstens 0,3 bar, bevorzugt höchstens 0,28 bar, bevorzugt höchstens 0,26 bar, bevorzugt höchstens 0,24 bar, bevorzugt höchstens 0,22 bar.

In einer bevorzugten Ausführungsform der vorliegenden Erfindung erfolgt die Durchmischung in Schritt b) kontinuierlich.

In einer besonders bevorzugten Ausführungsform der vorliegenden Erfindung beträgt die Dauer des Verfahrensschrittes b) 5 bis 30 min, insbesondere 7 bis 28 min, insbesondere 8 bis 27 min, insbesondere 5 bis 20 min, insbesondere 9 bis 20 min, insbesondere 5 bis 15 min, insbesondere 8 bis 14 min.

In einer besonders bevorzugten Ausführungsform der vorliegenden Erfindung ist das Abkühlen in Verfahrensschritt c) ein passives Abkühlen. Gemäß dieser Ausführungsform kann vorgesehen sein, das in Schritt b) bei einer bestimmten Temperatur vorliegende wässrige Medium, insbesondere die wässrige Lösung oder der wässrige Sirup, dadurch abkühlen zu lassen, dass keine Hitze zugeführt wird, beispielsweise durch Stehenlassen bei Raumtemperatur oder durch Lagerung oder Transport auf einem Kühltisch oder Kühlband. In einer anderen Ausführungsform der vorliegenden Erfindung kann das Abkühlen in Verfahrensschritt c) auch ein aktives Abkühlen unter Einsatz von abkühlenden Mitteln sein.

In einer weiteren bevorzugten Ausführungsform der vorliegenden Erfindung erfolgt das Abkühlen des wässrigen Mediums in Schritt c) auf eine Temperatur von 72 bis 88 °C, bevorzugt 74 bis 86 °C, bevorzugt 76 bis 84 °C, bevorzugt 78 bis 82 °C, bevorzugt 80 °C.

In einer bevorzugten Ausführungsform der vorliegenden Erfindung weist die in Schritt c) erhaltene plastische Masse einen Wassergehalt von 1 bis 4 %, bevorzugt 1,5 bis 3 %, bevorzugt 1,6 bis 2,8 %, besonders bevorzugt 1,9 bis 2,6 %, auf (jeweils bezogen auf die Gesamtmasse der plastischen Masse).

In einer weiteren bevorzugten Ausführungsform der vorliegenden Erfindung weist die in Schritt c) erhaltene plastische Masse einen Wassergehalt von höchstens 4 %, bevorzugt höchstens 3,9 %, bevorzugt höchstens 3,8 %, bevorzugt höchstens 3,7 %, bevorzugt höchstens 3,6 %, bevorzugt höchstens 3,5 %, bevorzugt höchstens 3,4 %, bevorzugt höchstens 3,3 %, bevorzugt höchstens 3,2 %, bevorzugt höchstens 3,1 %, bevorzugt höchstens 3,0 %, bevorzugt höchstens 2,9 %, bevorzugt höchstens 2,8 %, bevorzugt höchstens 2,7 %, bevorzugt höchstens 2,6 %, bevorzugt höchstens 2,5%, bevorzugt höchstens 2,4 %, bevorzugt höchstens 2,3 %, bevorzugt höchstens 2,2 %, bevorzugt höchstens 2,1 %, bevorzugt höchstens 2,0 %, bevorzugt höchstens 1,9 %, bevorzugt höchstens 1,8 %, bevorzugt höchstens 1,7 %, bevorzugt höchstens 1,6 %, bevorzugt höchstens 1,5 %, auf (jeweils bezogen auf die Gesamtmasse der plastischen Masse).

In einer bevorzugten Ausführungsform der vorliegenden Erfindung weist das in Verfahrensschritt a) bereitgestellte wässrige Medium zusätzlich zu der Trehalulose-haltigen Zusammensetzung, insbesondere die wässrige Lösung oder der wässrige Sirup, mindestens einen Hilfs- oder Zusatzstoff auf. Dieser mindestens eine Hilfs- oder Zusatzstoff ist bevorzugt ausgewählt aus der Gruppe bestehend aus Farbstoffen, Geschmacksstoffen, Aromen, lebensmittelverträgliche Säuren oder saure Salze, Konservierungsmittel, Wirkstoffe, Füllstoffe, Fette, Fettersatzstoffe, Öle, Bindemittel, Milcherzeugnisse, Emulgatoren, Intensiv-Süßstoffe, Süßungsmittel, medizinisch wirksame Stoffe, Zuckeralkohole, Polysaccharide, Oligosaccharide, weiterer Zucker und Mineralsalze, insbesondere Salze mit Ca²⁺, NaCl, Trinatriumcitrat, Salze mit Phosphat oder Salze mit Mg²⁺.

Demgemäß ist in einer bevorzugten Ausführungsform vorgesehen, dass das wässrige Medium neben der Trehalulose-haltigen Zusammensetzung mindestens einen Hilfs- oder Zusatzstoff aufweisen kann, der dem Medium zusätzlich zu der Trehalulose-haltigen Zusammensetzung zugegeben wird.

Ein erfindungsgemäß bevorzugt vorgesehener mindestens eine Hilfs- oder Zusatzstoff kann in einer Menge von 0 bis 50 Gew.-% , insbesondere 1 bis 50 Gew.-% , insbesondere 2 bis 50 Gew.-%, insbesondere 10 bis 50 Gew.-%, insbesondere 10 bis 40 Gew.-%, insbesondere 20 bis 40 Gew.-%, insbesondere 30 bis 35 Gew.-% (bezogen auf die Gesamttrockensubstanz des wässrigen Mediums) in dem wässrigen Medium vorhanden sein.

In einer besonders bevorzugten Ausführungsform kann vorgesehen sein, dass der mindestens eine zugesetzte Hilfs- oder Zusatzstoff ein Zucker ist, insbesondere kann ein Zucker zugesetzt sein, der in der Trehalulose-haltigen Zusammensetzung bereits vorhanden ist und dem wässrigen Medium zusätzlich zur Erhöhung der im wässrigen Medium vorhandenen Menge dieses Zuckers zugesetzt wird, beispielsweise Saccharose, Glucose oder Fructose.

Sofern im Zusammenhang mit der vorliegenden Erfindung quantitative Angaben zum Gehalt an mono-, di-, oligo- oder polymeren Zuckern, bezogen auf die das wässrige Medium enthaltende Trehalulose-haltige Zusammensetzung oder bezogen auf eine erfindungsgemäß hergestellte Hartkaramelle, gemacht werden, ist der Gesamtgehalt des jeweiligen Zuckers gemeint, unabhängig davon, ob dieser Zuckergehalt durch Einbringen über die Trehalulose-haltige Zusammensetzung oder durch zusätzliche Zugabe zum wässrigen Medium bewirkt wurde.

In einer bevorzugten Ausführungsform der vorliegenden Erfindung umfasst das in Schritt a) bereitgestellte wässrige Medium, insbesondere die wässrige Lösung oder der wässrige Sirup, mindestens eine lebensmittelverträgliche Säure und/oder ein saures Salz. Bevorzugt umfasst das wässrige Medium, insbesondere die wässrige Lösung oder der wässrige Sirup, mindestens eine organische Säure, insbesondere eine organische Säure ausgewählt aus der Gruppe bestehend aus Zitronensäure, Äpfelsäure, Milchsäure, Weinsäure und Ascorbinsäure.

In einer weiteren bevorzugten Ausführungsform der vorliegenden Erfindung ist das in Schritt a) bereitgestellte wässrige Medium, insbesondere die wässrige Lösung oder der wässrige Sirup, frei, beziehungsweise im Wesentlichen frei, von Säure.

Im "Wesentlichen frei" im Zusammenhang mit der vorliegenden Erfindung bedeutet, dass das Medium Komponenten, hier freie Säuren und/oder saure Salze von Säuren, in jeweils so geringen Anteilen auf, dass der Fachmann darunter kein diese Komponenten enthaltendes Medium, hier kein säurehaltiges wässriges Medium, insbesondere keine wässrige Lösung oder wässriger Sirup, mehr versteht.

Bevorzugt weist das in Schritt a) bereitgestellte wässrige Medium, insbesondere die wässrige Lösung oder der wässrige Sirup, weniger als 5 Gew.-%, bevorzugt weniger als 4 Gew.-%, bevorzugt weniger als 3 Gew.-%, bevorzugt weniger als 2 Gew.-%, bevorzugt weniger als 1 Gew.-%, bevorzugt weniger als 0,5 Gew.-%, bevorzugt weniger als 0,1 Gew.-%, bevorzugt weniger als 0,05 Gew.-%, bevorzugt weniger als 0,01 Gew.-% Säure und/oder saure Salze auf (jeweils bezogen auf die Gesamttrockensubstanz des wässrigen Mediums, insbesondere der wässrigen Lösung oder des wässrigen Sirups).

In einer weiteren bevorzugten Ausführungsform der vorliegenden Erfindung ist das in Schritt a) bereitgestellte wässrige Medium, insbesondere die wässrige Lösung oder der wässrige Sirup, frei, insbesondere im Wesentlichen frei, von Fett. In einer weiteren Ausführungsform ist das in Schritt a) bereitgestellte wässrige Medium, insbesondere die wässrige Lösung oder der wässrige Sirup, frei, insbesondere im Wesentlichen frei, von Öl. In beiden Fällen ist der Anteil an Fett und/oder Öl in dem wässrigen Medium, insbesondere der wässrigen Lösung oder der wässrige Sirup, so gering, dass der Fachmann nicht von einem Fett- und/oder Öl-haltigen wässrigen Medium, insbesondere einer wässrigen Lösung oder wässrigem Sirup ausgeht. Bevorzugt weist das in Schritt a) bereitgestellte wässrige Medium, insbesondere die wässrige Lösung oder der wässrige Sirup, weniger als 5 Gew.-%, bevorzugt weniger als 4 Gew.-%, bevorzugt weniger als 3 Gew.-%, bevorzugt weniger als 2 Gew.-%, bevorzugt weniger als 1 Gew.-%, bevorzugt weniger als 0,5 Gew.-%, bevorzugt weniger als 0,1 Gew.-%, bevorzugt weniger als 0,05 Gew.-%, bevorzugt weniger als 0,01 Gew.-%, Fett und/oder Öl oder Fett- und/oder Öl-haltige Bestandteile auf (jeweils bezogen auf die Gesamttrockensubstanz des wässrigen Mediums, insbesondere der wässrigen Lösung oder des wässrigen Sirups).

In einer bevorzugten Ausführungsform der vorliegenden Erfindung enthält das in Schritt a) bereitgestellte wässrige Medium, insbesondere die wässrige Lösung oder der wässrige Sirup, mindestens einen weiteren Zucker, insbesondere Saccharose, Glucose und/oder Fructose.

Bevorzugt weist das in Schritt a) bereitgestellte wässrige Medium, insbesondere die wässrige Lösung oder der wässrige Sirup, gemäß der vorliegenden Erfindung Saccharose in einer Menge von höchstens 55 Gew.-%, bevorzugt höchstens 50 Gew.-%, bevorzugt höchstens 40 Gew.-%, bevorzugt höchstens 30 Gew.-%, bevorzugt höchstens 25 Gew.-%, bevorzugt höchstens 20 Gew.-%, bevorzugt höchstens 15 Gew.-%, bevorzugt höchstens 10 Gew.-%, bevorzugt höchstens 5 Gew.-%, (jeweils bezogen auf die Gesamttrockensubstanz des wässrigen Mediums, insbesondere der wässrigen Lösung oder des wässrigen Sirups) auf.

Besonders bevorzugt weist das in Schritt a) bereitgestellte wässrige Medium, insbesondere die wässrige Lösung oder der wässrige Sirup, Saccharose in einer Menge von 2 bis 55 Gew.-%, insbesondere 2 bis 50 Gew.-%, bevorzugt 4 bis 40 Gew.-%, bevorzugt 5 bis 30 Gew.-%, bevorzugt 7,5 bis 27,5 Gew.-%, bevorzugt 10 bis 25 Gew.-%, bevorzugt 12,5 bis 22,5 Gew.-%, bevorzugt 15 bis 20 Gew.-%, (jeweils bezogen auf die Gesamttrockensubstanz des wässrigen Mediums, insbesondere der wässrigen Lösung oder des wässrigen Sirups) auf.

Bevorzugt weist das in Schritt a) bereitgestellte wässrige Medium, insbesondere die wässrige Lösung oder der wässrige Sirup, gemäß der vorliegenden Erfindung Glucose in einer Menge von höchstens 50 Gew.-%, bevorzugt höchstens 40 Gew.-%, bevorzugt höchstens 30 Gew.-%, bevorzugt höchstens 25 Gew.-%, bevorzugt höchstens 20 Gew.-%, bevorzugt höchstens 15 Gew.-%, bevorzugt höchstens 10 Gew.-%, bevorzugt höchstens 5 Gew.-%, (jeweils bezogen auf die Gesamttrockensubstanz des wässrigen Mediums, insbesondere der wässrigen Lösung oder des wässrigen Sirups) auf.

Besonders bevorzugt weist das in Schritt a) bereitgestellte wässrige Medium, insbesondere die wässrige Lösung oder der wässrige Sirup, Glucose in einer Menge von 2 bis 50 Gew.-%, bevorzugt 4 bis 40 Gew.-%, bevorzugt 5 bis 30 Gew.-%, bevorzugt 7,5 bis 27,5 Gew.-%, bevorzugt 10 bis 25 Gew.-%, bevorzugt 12,5 bis 22,5 Gew.-%, bevorzugt 15 bis 20 Gew.-%, (jeweils bezogen auf die Gesamttrockensubstanz des wässrigen Mediums, insbesondere der wässrigen Lösung oder des wässrigen Sirups) auf.

Bevorzugt weist das in Schritt a) bereitgestellte wässrige Medium, insbesondere die wässrige Lösung oder der wässrige Sirup, gemäß der vorliegenden Erfindung Fructose in einer Menge von höchstens 50 Gew.-%., bevorzugt höchstens 40 Gew.-%, bevorzugt höchstens 30 Gew.-%, bevorzugt höchstens 25 Gew.-%, bevorzugt höchstens 20 Gew.-%, bevorzugt höchstens 15 Gew.-%, bevorzugt höchstens 10 Gew.-% , bevorzugt höchstens 5 Gew.-%, (jeweils bezogen auf die Gesamttrockensubstanz des wässrigen Mediums, insbesondere der wässrigen Lösung oder des wässrigen Sirups) auf.

Bevorzugt weist das in Schritt a) bereitgestellte wässrige Medium, insbesondere die wässrige Lösung oder der wässrige Sirup, Fructose in einer Menge von 2 bis 50 Gew.-%, bevorzugt 4 bis 40 Gew.-%, bevorzugt 5 bis 30 Gew.-%, bevorzugt 7,5 bis 27,5 Gew.-%, bevorzugt 10 bis 25 Gew.-%, bevorzugt 12,5 bis 22,5 Gew.-%, bevorzugt 15 bis 20 Gew.-%, (jeweils bezogen auf die Gesamttrockensubstanz des wässrigen Mediums, insbesondere der wässrigen Lösung oder des wässrigen Sirups) auf.

In einer bevorzugten Ausführungsform der vorliegenden Erfindung enthält das in Schritt a) bereitgestellte wässrige Medium, insbesondere die wässrige Lösung oder der wässrige Sirup, mindestens ein Polysaccharid in einer Menge von höchstens 5 Gew.-%, bevorzugt höchstens 4 Gew.-%, bevorzugt höchstens 3 Gew.-%, bevorzugt höchstens 2 Gew.-%, bevorzugt höchstens 1 Gew.-%, bevorzugt höchstens 0,5 Gew.-%, bevorzugt höchstens 0,2 Gew.-%, bevorzugt höchstens 0,1 Gew.-% (jeweils bezogen auf die Gesamttrockensubstanz des wässrigen Mediums, insbesondere der wässrigen Lösung oder des wässrigen Sirups). Bevorzugt enthält das in Schritt a) bereitgestellte wässrige Medium, insbesondere die wässrige Lösung oder der wässrige Sirup, kein Polysaccharid.

In einer weiteren bevorzugten Ausführungsform der vorliegenden Erfindung enthält das in Schritt a) bereitgestellte wässrige Medium, insbesondere die wässrige Lösung oder der wässrige Sirup, mindestens ein Oligosaccharid in einer Menge von höchstens 5 Gew.-%, bevorzugt höchstens 4 Gew.-%, bevorzugt höchstens 3 Gew.-%, bevorzugt höchstens 2 Gew.-%, bevorzugt höchstens 1 Gew.-%, bevorzugt höchstens 0,5 Gew.-%, bevorzugt höchstens 0,2 Gew.-%, bevorzugt höchstens 0,1 Gew.-% (jeweils bezogen auf die Gesamttrockensubstanz des wässrigen Mediums, insbesondere der wässrigen Lösung oder des wässrigen Sirups). Bevorzugt enthält das in Schritt a) bereitgestellte wässrige Medium, insbesondere die wässrige Lösung oder der wässrige Sirup, kein Oligosaccharid.

Bevorzugt enthält das in Schritt a) bereitgestellte wässrige Medium, insbesondere die wässrige Lösung oder der wässrige Sirup, kein Oligosaccharid und kein Polysaccharid. Besonders bevorzugt enthält das in Schritt a) bereitgestellte wässrige Medium, insbesondere die wässrige Lösung oder der wässrige Sirup, kein Oligosaccharid und/oder Polysaccharid ausgewählt aus der Gruppe bestehend aus Inulin, unverdauliches Dextrin, Polydextrose, Sucomalt oder Kombinationen davon.

Bevorzugt umfasst das in Schritt a) bereitgestellte wässrige Medium, insbesondere die wässrige Lösung oder der wässrige Sirup mindestens einen Zuckeralkohol. Bevorzugt ist der mindestens eine Zuckeralkohol ausgewählt aus der Gruppe bestehend aus Isomalt, 1,6-GPS (6-O-α-D-Glucopyranosyl-D-Sorbit), 1,1-GPM (1-O-α-D-Glucopyranosyl-D-Mannit), 1,1-GPS (1-O-α-D-Glucopyranosyl-D-Sorbit), hydrierte und/oder nicht hydrierte Stärkehydrolysate (HSH), Xylit, Sorbit, Erythrit, Mannit, Maltit, Laktit, Maltodextrine oder Mischungen davon.

In einer besonders bevorzugten Ausführungsform enthält das in Verfahrensschritt a) bereitgestellte wässrige Medium, insbesondere die wässrige Lösung oder der wässrige Sirup, Isomalt.

Bevorzugt weist das in Schritt a) bereitgestellte wässrige Medium, insbesondere die wässrige Lösung oder der wässrige Sirup, gemäß der vorliegenden Erfindung Isomalt, in einer Menge von höchstens 50 Gew.-%., bevorzugt höchstens 40 Gew.-%, bevorzugt höchstens 30 Gew.-%, bevorzugt höchstens 25 Gew.-%, bevorzugt höchstens 20 Gew.-%, bevorzugt höchstens 15 Gew.-%, bevorzugt höchstens 10 Gew.-% , bevorzugt höchstens 5 Gew.-%, (jeweils bezogen auf die Gesamttrockensubstanz des wässrigen Mediums, insbesondere der wässrigen Lösung oder des wässrigen Sirups) auf.

Bevorzugt weist das in Schritt a) bereitgestellte wässrige Medium, insbesondere die wässrige Lösung oder der wässrige Sirup, Isomalt, in einer Menge von höchstens 2 bis 50 Gew.-%., bevorzugt 4 bis 40 Gew.-%, bevorzugt 5 bis 30 Gew.-%, bevorzugt 7,5 bis 27,5 Gew.-%, bevorzugt 10 bis 25 Gew.-%, bevorzugt 12,5 bis 22,5 Gew.-%, bevorzugt 15 bis 20 Gew.-%, (jeweils bezogen auf die Gesamttrockensubstanz des wässrigen Mediums, insbesondere der wässrigen Lösung oder des wässrigen Sirups) auf.

In einer besonders bevorzugten Ausführungsform weist das bereitgestellte wässrige Medium kein Isomalt auf.

Bevorzugt weist das in Schritt a) bereitgestellte wässrige Medium, insbesondere die wässrige Lösung oder der wässrige Sirup, mindestens einen medizinisch wirksamen Stoff auf, insbesondere Antihistamine, Antibiotika, Fungizide, Microbiozide, Hexylresorcin, Dextromethorphan-Hydrobromid, Menthol, Nicotin, Coffein, Vitamine, Zink, Eukalyptus, Benzocain, Cetylpyridinium, Fluoride, Phenylpropanolamin oder andere pharmazeutisch wirksame Substanzen. Bei Herstellung einer medizinisch aktiven Hartkaramelle kann der Wirkstoff in dem wässrigen Medium, insbesondere in der wässrigen Lösung, in einer Menge von zum Beispiel 1,0 bis 15 mg pro Einheit enthalten sein.

In einer bevorzugten Ausführungsform der vorliegenden Erfindung umfasst das in Schritt a) bereitgestellte wässrige Medium, insbesondere die wässrige Lösung oder der wässrige Sirup, mindestens einen Geschmacksstoff und/oder ein Aroma. Besonders bevorzugt umfasst das in Schritt a) bereitgestellte wässrige Medium, insbesondere die wässrige Lösung oder der wässrige Sirup, mindestens einen Geschmacksstoff oder ein Aroma ausgewählt aus der Gruppe bestehend aus Pflanzen- und Fruchtöle, Zitrusöle, Blüten- oder Blattöle, Öle aus Kirsche, Erdbeere, Menthol, Eukalyptus, Pfefferminz, Honig oder grüner Minze, Fruchtessenzen und Grüner-Tee-Extrakt. Bevorzugt umfasst das in Schritt a) bereitgestellte wässrige Medium, insbesondere die wässrige Lösung oder der wässrige Sirup, den mindestens einen Geschmacksstoff oder ein Aroma in einer Menge von 0,05 bis 3 Gew.-% (bezogen auf die Gesamttrockensubstanz des wässrigen Mediums, insbesondere der wässrigen Lösung oder des wässrigen Sirups).

In einer weiteren bevorzugten Ausführungsform umfasst das in Schritt a) bereitgestellte wässrige Medium, insbesondere die wässrige Lösung oder der wässrige Sirup, mindestens ein Bindemittel. Bevorzugt umfasst das in Schritt a) bereitgestellte wässrige Medium, insbesondere die wässrige Lösung oder der wässrige Sirup, mindestens ein Bindemittel ausgewählt aus der Gruppe bestehend aus Alginate, Cellulose, Gelatine und pflanzliche Gummis.

In einer weiteren bevorzugten Ausführungsform umfasst das in Schritt a) bereitgestellte wässrige Medium, insbesondere die wässrige Lösung oder der wässrige Sirup, mindestens einen Intensiv-Süßstoff. Besonders bevorzugt umfasst das in Schritt a) bereitgestellte wässrige Medium, insbesondere die wässrige Lösung oder der wässrige Sirup, mindestens einen Intensiv-Süßstoff ausgewählt aus der Gruppe bestehend aus Aspartam, Cyclamat, Acesulfam-K, Saccharin, Sucralose, Glycyrrhizin, Monellin, Dulcin, Naringin-Dihydrochalkon, Neotame, Alitame, Neohesperidin DC (Dihydrochalkon), Stevioside, Thaumatin oder Mischungen davon.

In einer bevorzugten Ausführungsform der vorliegenden Erfindung ist das in Schritt a) bereitgestellte wässrige Medium, insbesondere die wässrige Lösung oder der wässrige Sirup, frei von Intensiv-Süßstoffen.

In einer bevorzugten Ausführungsform der vorliegenden Erfindung umfasst das in Schritt a) bereitgestellte wässrige Medium, insbesondere die wässrige Lösung oder der wässrige Sirup, mindestens einen Farbstoff. Bevorzugt ist der mindestens eine Farbstoff ein synthetischer Farbstoff, insbesondere ausgewählt aus der Gruppe bestehend aus Erythrosin, Indigo Carmine, Allurarot, E171, Tartrazin und Titandioxid. Bevorzugt ist der mindestens eine Farbstoff ein natürlicher Farbstoff, insbesondere ausgewählt aus der Gruppe bestehend aus Carotinoide, zum Beispiel Beta-Carotin, Riboflavine, Chlorophyll, Anthocyane, zum Beispiel aus der Roten Bete, Betanin. Bevorzugt umfasst das in Schritt a) bereitgestellte wässrige Medium, insbesondere die wässrige Lösung oder der wässrige Sirup, den mindestens einen synthetischen Farbstoff in einer Menge von 0,01 bis 0,03 Gew.-% (bezogen auf die Gesamttrockensubstanz des wässrigen Mediums, insbesondere der wässrigen Lösung oder des wässrigen Sirups). In einer weiteren bevorzugten Ausführungsform umfasst das in Schritt a) bereitgestellte wässrige Medium, insbesondere die wässrige Lösung oder der wässrige Sirup, den mindestens einen natürlichen Farbstoff in einer Menge von 0,1 bis 1 Gew.-% (bezogen auf die Gesamttrockensubstanz des wässrigen Mediums, insbesondere der wässrigen Lösung oder des wässrigen Sirups). Bevorzugt umfasst das in Schritt a) bereitgestellte wässrige Medium, insbesondere die wässrige Lösung oder der wässrige Sirup, mindestens einen synthetischen und mindestens einen natürlichen Farbstoff.

In einer bevorzugten Ausführungsform der vorliegenden Erfindung ist das in Schritt a) bereitgestellte wässrige Medium, insbesondere die wässrige Lösung oder der wässrige Sirup, frei von Farbstoffen.

In einer bevorzugten Ausführungsform umfasst das in Schritt a) bereitgestellte wässrige Medium, insbesondere die wässrige Lösung oder der wässrige Sirup, mindestens ein Milcherzeugnis, insbesondere ein Molkereierzeugnis, bevorzugt Vollmilchpulver, Sahne oder Butter. Bevorzugt umfasst das in Schritt a) bereitgestellte wässrige Medium, insbesondere die wässrige Lösung oder der wässrige Sirup, das mindestens eine Milcherzeugnis, insbesondere Molkereierzeugnis, bevorzugt Vollmilchpulver, Sahne oder Butter, in einer Menge von 0 bis 9 Gew.-%, insbesondere 1 bis 8 Gew.-% (jeweils bezogen auf die Gesamtgewicht des wässrigen Mediums, insbesondere der wässrigen Lösung oder des wässrigen Sirups).

In einer weiteren bevorzugten Ausführungsform umfasst das in Schritt a) bereitgestellte wässrige Medium, insbesondere die wässrige Lösung oder der wässrige Sirup, mindestens einen Emulgator, insbesondere Lecithin, zum Beispiel Sojalecithin. Bevorzugt umfasst das in Schritt a) bereitgestellte wässrige Medium, insbesondere die wässrige Lösung oder der wässrige Sirup, den mindestens einen Emulgator in einer Menge von 0 bis 5 Gew.-%, insbesondere 1 bis 4 Gew.-% (jeweils bezogen auf die Gesamttrockensubstanz des wässrigen Mediums, insbesondere der wässrigen Lösung oder des wässrigen Sirups).

Die vorliegende Erfindung betrifft ferner eine Hartkaramelle enthaltend 50 bis 98 Gew.-% (jeweils bezogen auf die Gesamttrockensubstanz der Hartkaramelle) einer Trehalulose-haltigen Zusammensetzung, umfassend 5 bis 50 Gew.-% Isomaltulose und 20 bis 95 Gew.-% Trehalulose (jeweils bezogen auf die Trockensubstanz der Trehalulose-haltigen Zusammensetzung), hergestellt durch das erfindungsgemäße Verfahren, wobei die Hartkaramelle einen Restwassergehalt im Bereich von 1,5 bis 3 Gew.-%, bevorzugt 1,9 bis 2,6 Gew.-% bezogen auf das Gesamtgewicht der Hartkaramelle), aufweist und wobei die Trehalulose-haltige Zusammensetzung in der Hartkaramelle nicht kristallin vorliegt.

Die erfindungsgemäßen Hartkaramellen zeichnen sich durch einen milden Geschmack und ein Saccharose-ähnliches Süßeprofil aus, weisen eine niedrige Insulinreaktion und sind ernährungsphysiologisch vorteilhaft. Insbesondere zeigen die erfindungsgemäßen Hartkaramellen keine Kristallisationsneigung.

In der vorliegenden Erfindung enthält die Hartkaramelle 50 bis 98 Gew.-% (jeweils bezogen auf die Gesamttrockensubstanz der Hartkaramelle) einer Trehalulose-haltigen Zusammensetzung, umfassend 15 bis 25 Gew.-% Isomaltulose und 75 bis 85 Gew.-% Trehalulose (jeweils bezogen auf die Trockensubstanz der Zusammensetzung).

In einer bevorzugten Ausführungsform der vorliegenden Erfindung liegt die Trehalulose-haltige Zusammensetzung in der Hartkaramelle im Wesentlichen, bevorzugt vollständig, amorph vor.

Erfindungsgemäß liegt die Trehalulose-haltige Zusammensetzung in der Hartkaramelle nicht kristallin vor. Bevorzugt liegt die Trehalulose-haltige Zusammensetzung, insbesondere liegen die Trehalulose und die Isomaltulose, bevorzugt die Trehalulose, bevorzugt die Isomaltulose, in der Hartkaramelle, bevorzugt im Kern der Hartkaramelle, amorph vor.

In einer weiteren bevorzugten Ausführungsform der vorliegenden Erfindung ist die Hartkaramelle transparent.

Erfindungsgemäß weist die Hartkaramelle einen Restwassergehalt von 1,5 bis 3 Gew.-%, bevorzugt 1,9 bis 2,6 Gew.-% (bezogen auf das Gesamtgewicht der Hartkaramelle) auf.

In einer bevorzugten Ausführungsform der vorliegenden Erfindung umfasst die erfindungsgemäße Hartkaramelle mindestens einen Hilfs- oder Zusatzstoff ausgewählt aus der

Gruppe bestehend aus Farbstoffen, Geschmacksstoffen, Aromen, lebensmittelverträgliche Säuren oder saure Salze, Konservierungsmittel, Wirkstoffe, Füllstoffe, Fette, Fettersatzstoffe, Öle, Bindemittel, Milcherzeugnisse, Emulgatoren, Intensiv-Süßstoffe, medizinisch wirksame Stoffe, Zuckeralkohole, Polysaccharide, Oligosaccharide, weiterer Zucker, Mineralsalze, insbesondere Salze mit Ca²⁺, NaCl, Trinatriumcitrat, Salze mit Phosphat oder Salze mit Mg²⁺.

In einer bevorzugten Ausführungsform der vorliegenden Erfindung umfasst die Hartkaramelle mindestens eine Säure und/oder ein saures Salz. Bevorzugt umfasst die Hartkaramelle mindestens eine organische Säure, insbesondere eine organische Säure ausgewählt aus der Gruppe bestehend aus Zitronensäure, Äpfelsäure, Milchsäure, Weinsäure und Ascorbinsäure.

In einer weiteren bevorzugten Ausführungsform der vorliegenden Erfindung ist die Hartkaramelle frei, beziehungsweise im Wesentlichen frei, von Säure. Das heißt, sie weist freie Säuren und/oder saure Salze von Säuren in jeweils so geringen Anteilen auf, dass der Fachmann darunter keine säurehaltige Hartkaramelle mehr versteht. Bevorzugt weist die erfindungsgemäße Hartkaramelle weniger als 5 Gew.-%, bevorzugt weniger als 4 Gew.-%, bevorzugt weniger als 3 Gew.-%, bevorzugt weniger als 2 Gew.-%, bevorzugt weniger als 1 Gew.-%, bevorzugt weniger als 0,5 Gew.-%, bevorzugt weniger als 0,1 Gew.-%, bevorzugt weniger als 0,05 Gew.-%, bevorzugt weniger als 0,01 Gew.-% Säure und/oder saure Salze auf (jeweils bezogen auf die Gesamttrockensubstanz der Hartkaramelle).

In einer weiteren bevorzugten Ausführungsform der vorliegenden Erfindung ist die Hartkaramelle frei, insbesondere im Wesentlichen frei, von Fett. In einer weiteren Ausführungsform ist die erfindungsgemäße Hartkaramelle frei, insbesondere im Wesentlichen frei, von Öl. In beiden Fällen ist der Anteil an Fett und/oder Öl in der Hartkaramelle so gering, dass der Fachmann nicht von einer Fett- und/oder Öl-haltigen Hartkaramelle ausgeht. Bevorzugt weist die erfindungsgemäße Hartkaramelle weniger als 5 Gew.-%, bevorzugt weniger als 4 Gew.-%, bevorzugt weniger als 3 Gew.-%, bevorzugt weniger als 2 Gew.-%, bevorzugt weniger als 1 Gew.-%, bevorzugt weniger als 0,5 Gew.-%, bevorzugt weniger als 0,1 Gew.-%, bevorzugt weniger als 0,05 Gew.-%, bevorzugt weniger als 0,01 Gew.-%, Fett und/oder Öl oder Fett- und/oder Öl-haltige Bestandteile auf (jeweils bezogen auf die Gesamttrockensubstanz der Hartkaramelle).

In einer besonders bevorzugten Ausführungsform der vorliegenden Erfindung enthält die erfindungsgemäße Hartkaramelle neben der Trehalulose-haltigen Zusammensetzung mindestens einen Hilfs- oder Zusatzstoff.

In besonders bevorzugter Ausführungsform kann der mindestens eine Hilfs- oder Zusatzstoff in einer Menge von 0 bis 50 Gew.-%, insbesondere 1 bis 50 Gew.-%, insbesondere 2 bis 50 Gew.-%, insbesondere 10 bis 50 Gew.-%, insbesondere 10 bis 40 Gew.-%, insbesondere 20 bis 40 Gew.-%, insbesondere 20 bis 40 Gew.-%, insbesondere 30 bis 35 Gew.-% (jeweils bezogen auf die Gesamttrockensubstanz der Hartkaramelle) vorliegen.

In einer bevorzugten Ausführungsform der vorliegenden Erfindung enthält die Hartkaramelle neben Trehalulose und Isomaltulose mindestens einen weiteren, gegebenenfalls zugesetzten, Zucker, insbesondere Saccharose, Glucose und/oder Fructose.

Bevorzugt weist die Hartkaramelle gemäß der vorliegenden Erfindung Saccharose in einer Menge von höchstens 55 Gew.-%, bevorzugt höchstens 50 Gew.-%, bevorzugt höchstens 40 Gew.-%, bevorzugt höchstens 30 Gew.-%, bevorzugt höchstens 25 Gew.-%, bevorzugt höchstens 20 Gew.-%, bevorzugt höchstens 15 Gew.-%, bevorzugt höchstens 10 Gew.-%, bevorzugt höchstens 5 Gew.-%, (jeweils bezogen auf die Gesamttrockensubstanz der Hartkaramelle) auf.

Besonders bevorzugt weist die Hartkaramelle Saccharose in einer Menge von 2 bis 55 Gew.-%, bevorzugt 2 bis 50 Gew.-%, bevorzugt 4 bis 40 Gew.-%, bevorzugt 5 bis 30 Gew.-%, bevorzugt 7,5 bis 27,5 Gew.-%, bevorzugt 10 bis 25 Gew.-%, bevorzugt 12,5 bis 22,5 Gew.-%, bevorzugt 15 bis 20 Gew.-%, (jeweils bezogen auf die Gesamttrockensubstanz der Hartkaramelle) auf.

Bevorzugt weist die Hartkaramelle gemäß der vorliegenden Erfindung Glucose in einer Menge von höchstens 50 Gew.-%, bevorzugt höchstens 40 Gew.-%, bevorzugt höchstens 30 Gew.-%, bevorzugt höchstens 25 Gew.-%, bevorzugt höchstens 20 Gew.-%, bevorzugt höchstens 15 Gew.-%, bevorzugt höchstens 10 Gew.-%, bevorzugt höchstens 5 Gew.-%, (jeweils bezogen auf die Gesamttrockensubstanz der Hartkaramelle) auf.

Besonders bevorzugt weist die Hartkaramelle Glucose in einer Menge von 2 bis 50 Gew.-%, bevorzugt 4 bis 40 Gew.-%, bevorzugt 5 bis 30 Gew.-%, bevorzugt 7,5 bis 27,5 Gew.-%, bevorzugt 10 bis 25 Gew.-%, bevorzugt 12,5 bis 22,5 Gew.-%, bevorzugt 15 bis 20 Gew.-%, (jeweils bezogen auf die Gesamttrockensubstanz der Hartkaramelle) auf.

Bevorzugt weist die Hartkaramelle gemäß der vorliegenden Erfindung Fructose in einer Menge von höchstens 50 Gew.-%, bevorzugt höchstens 40 Gew.-%, bevorzugt höchstens 30 Gew.-%, bevorzugt höchstens 25 Gew.-%, bevorzugt höchstens 20 Gew.-%, bevorzugt höchstens 15 Gew.-%, bevorzugt höchstens 10 Gew.-% , bevorzugt höchstens 5 Gew.-%, (jeweils bezogen auf die Gesamttrockensubstanz des wässrigen Mediums, insbesondere der wässrigen Lösung oder des wässrigen Sirups) auf.

Besonders bevorzugt weist die Hartkaramelle Fructose in einer Menge von 2 bis 50 Gew.-%, bevorzugt 4 bis 40 Gew.-%, bevorzugt 5 bis 30 Gew.-%, bevorzugt 7,5 bis 27,5 Gew.-%, bevorzugt 10 bis 25 Gew.-%, bevorzugt 12,5 bis 22,5 Gew.-%, bevorzugt 15 bis 20 Gew.-%, (jeweils bezogen auf die Gesamttrockensubstanz des wässrigen Mediums, insbesondere der wässrigen Lösung oder des wässrigen Sirups) auf.

In einer bevorzugten Ausführungsform der vorliegenden Erfindung enthält die Hartkaramelle mindestens ein Polysaccharid in einer Menge von höchstens 5 Gew.-%, bevorzugt höchstens 4 Gew.-%, bevorzugt höchstens 3 Gew.-%, bevorzugt höchstens 2 Gew.-%, bevorzugt höchstens 1 Gew.-%, bevorzugt höchstens 0,5 Gew.-%, bevorzugt höchstens 0,2 Gew.-%, bevorzugt höchstens 0,1 Gew.-% (jeweils bezogen auf die Gesamttrockensubstanz der Hartkaramelle). Bevorzugt enthält die erfindungsgemäße Hartkaramelle kein Polysaccharid.

In einer weiteren bevorzugten Ausführungsform der vorliegenden Erfindung enthält die Hartkaramelle mindestens ein Oligosaccharid in einer Menge von höchstens 5 Gew.-%, bevorzugt höchstens 4 Gew.-%, bevorzugt höchstens 3 Gew.-%, bevorzugt höchstens 2 Gew.-%, bevorzugt höchstens 1 Gew.-%, bevorzugt höchstens 0,5 Gew.-%, bevorzugt höchstens 0,2 Gew.-%, bevorzugt höchstens 0,1 Gew.-% (jeweils bezogen auf die Gesamttrockensubstanz der Hartkaramelle). Bevorzugt enthält die erfindungsgemäße Hartkaramelle kein Oligosaccharid.

Bevorzugt enthält die erfindungsgemäße Hartkaramelle kein Oligosaccharid und kein Polysaccharid. Besonders bevorzugt enthält die Hartkaramelle kein Oligosaccharid und/oder Polysaccharid ausgewählt aus der Gruppe bestehend aus Inulin, unverdauliches Dextrin, Polydextrose, Sucomalt oder Kombinationen davon.

Bevorzugt umfasst die erfindungsgemäße Hartkaramelle mindestens einen Zuckeralkohol. Bevorzugt ist der mindestens eine Zuckeralkohol ausgewählt aus der Gruppe bestehend aus Isomalt, 1,6-GPS, 1,1-GPM, 1,1-GPS, hydrierte und/oder nicht hydrierte Stärkehydrolysate (HSH), Xylit, Sorbit, Erythrit, Mannit, Maltit, Laktit, Maltodextrine oder Mischungen davon.

Bevorzugt weist die Hartkaramelle gemäß der vorliegenden Erfindung Isomalt in einer Menge von höchstens 50 Gew.-%, bevorzugt höchstens 40 Gew.-%, bevorzugt höchstens 30 Gew.-%, bevorzugt höchstens 25 Gew.-%, bevorzugt höchstens 20 Gew.-%, bevorzugt höchstens 15 Gew.-%, bevorzugt höchstens 10 Gew.-%, bevorzugt höchstens 5 Gew.-%, (jeweils bezogen auf die Gesamttrockensubstanz des wässrigen Mediums, insbesondere der wässrigen Lösung oder des wässrigen Sirups) auf.

Besonders bevorzugt weist die Hartkaramelle Isomalt in einer Menge von 2 bis 50 Gew.-%, bevorzugt 4 bis 40 Gew.-%, bevorzugt 5 bis 30 Gew.-%, bevorzugt 7,5 bis 27,5 Gew.-%, bevorzugt 10 bis 25 Gew.-%, bevorzugt 12,5 bis 22,5 Gew.-%, bevorzugt 15 bis 20 Gew.-%, (jeweils bezogen auf die Gesamttrockensubstanz des wässrigen Mediums, insbesondere der wässrigen Lösung oder des wässrigen Sirups) auf.

In einer besonders bevorzugten Ausführungsform weist die erfindungsgemäße Hartkaramelle keinen Zuckeralkohol auf, insbesondere kein Isomalt.

Bevorzugt weist die erfindungsgemäße Hartkaramelle mindestens einen medizinisch wirksamen Stoff auf, insbesondere Antihistamine, Antibiotika, Fungizide, Microbiozide, Hexylresorcin, Dextromethorphan-Hydrobromid, Menthol, Nicotin, Coffein, Vitamine, Zink, Eukalyptus, Benzocain, Cetylpyridinium, Fluoride, Phenylpropanolamin oder andere pharmazeutisch wirksame Substanzen. Bei Verwendung als medizinisch aktive Hartkaramelle kann der Wirkstoff in der Hartkramelle in einer Menge von zum Beispiel 1,0 bis 15 mg pro Einheit enthalten sein.

In einer bevorzugten Ausführungsform der vorliegenden Erfindung umfasst die Hartkaramelle mindestens einen Geschmacks-/Aromastoff. Besonders bevorzugt umfasst die Hartkaramelle mindestens einen Geschmacks-/Aromastoff ausgewählt aus der Gruppe bestehend aus Pflanzen- und Fruchtöle, Zitrusöle, Blüten- oder Blattöle, Öle aus Kirsche, Erdbeere, Menthol, Eukalyptus, Pfefferminz, Honig oder grüner Minze, Fruchtessenzen und Grüner-Tee-Extrakt. Bevorzugt umfasst die Hartkaramelle den mindestens einen Geschmacks-/Aromastoff in einer Menge von 0,05 bis 3 Gew.-% (bezogen auf die Gesamttrockensubstanz der Hartkaramelle).

In einer weiteren bevorzugten Ausführungsform umfasst die Hartkaramelle mindestens ein Bindemittel. Bevorzugt umfasst die Hartkaramelle mindestens ein Bindemittel ausgewählt aus der Gruppe bestehend aus Alginate, Cellulose, Gelatine und pflanzliche Gummis.

In einer weiteren bevorzugten Ausführungsform umfasst die erfindungsgemäße Hartkaramelle mindestens einen Intensiv-Süßstoff. Besonders bevorzugt umfasst die erfindungsgemäße Hartkaramelle mindestens einen Intensiv-Süßstoff ausgewählt aus der Gruppe bestehend aus Aspartam, Cyclamat, Acesulfam-K, Saccharin, Sucralose, Glycyrrhizin, Monellin, Dulcin, Naringin-Dihydrochalkon, Neotame, Alitame, Neohesperidin DC (Dihydrochalkon), Stevioside, Thaumatin oder Mischungen davon.

In einer bevorzugten Ausführungsform der vorliegenden Erfindung ist die erfindungsgemäße Hartkaramelle frei von Intensiv-Süßstoffen.

In einer bevorzugten Ausführungsform der vorliegenden Erfindung umfasst die Hartkaramelle mindestens einen Farbstoff. Bevorzugt ist der mindestens eine Farbstoff ein synthetischer Farbstoff, insbesondere ausgewählt aus der Gruppe bestehend aus Erythrosin, Indigo Carmine, Allurarot, E171, Tartrazin und Titandioxid. Bevorzugt ist der mindestens eine Farbstoff ein natürlicher Farbstoff, insbesondere ausgewählt aus der Gruppe bestehend aus Carotinoide, zum Beispiel Beta-Carotin, Riboflavine, Chlorophyll, Anthocyane, zum Beispiel aus der Roten Bete, Betanin. Bevorzugt umfasst die erfindungsgemäße Hartkaramelle den mindestens einen synthetischen Farbstoff in einer Menge von 0,01 bis 0,03 Gew.-% (bezogen auf die Gesamttrockensubstanz der Hartkaramelle). In einer weiteren bevorzugten Ausführungsform umfasst die erfindungsgemäße Hartkaramelle den mindestens einen natürlichen Farbstoff in einer Menge von 0,1 bis 1 Gew.-% (bezogen auf die Gesamttrockensubstanz der Hartkaramelle). Bevorzugt umfasst die erfindungsgemäße Hartkaramelle mindestens einen synthetischen und mindestens einen natürlichen Farbstoff.

In einer bevorzugten Ausführungsform der vorliegenden Erfindung ist die erfindungsgemäße Hartkaramelle frei von Farbstoffen.

In einer bevorzugten Ausführungsform umfasst die erfindungsgemäße Hartkaramelle mindestens ein Milcherzeugnis, insbesondere ein Molkereierzeugnis, bevorzugt Vollmilchpulver, Sahne oder Butter. Bevorzugt umfasst die erfindungsgemäße Hartkaramelle das mindestens eine Milcherzeugnis, insbesondere Molkereierzeugnis, bevorzugt Vollmilchpulver, Sahne oder Butter, in einer Menge von 0 bis 9 Gew.-%, insbesondere 1 bis 8 Gew.-% (jeweils bezogen auf die Gesamtgewicht der Hartkaramelle).

In einer weiteren bevorzugten Ausführungsform umfasst die erfindungsgemäße Hartkaramelle mindestens einen Emulgator, insbesondere Lecithin, zum Beispiel Sojalecithin. Bevorzugt umfasst die erfindungsgemäße Hartkaramelle den mindestens einen Emulgator in einer Menge von 0 bis 5 Gew.-%, insbesondere 1 bis 4 Gew.-% (jeweils bezogen auf die Gesamttrockensubstanz der Hartkaramelle).

In einer bevorzugten Ausführungsform der vorliegenden Erfindung weist die erfindungsgemäße Hartkaramelle, insbesondere die nach dem erfindungsgemäßen Verfahren herstellbare, insbesondere hergestellte, Hartkaramelle eine Wiederfindung der ursprünglich eingesetzten Trehalulose-haltigen Zusammensetzung, insbesondere der in der ursprünglich eingesetzten Trehalulose-haltigen Zusammensetzung enthaltenen Kohlenhydrate, insbesondere der in der ursprünglich eingesetzten Trehalulose-haltigen Zusammensetzung enthaltenen Trehalulose und Isomaltulose, von mindestens 90 %, bevorzugt mindestens 91 %, bevorzugt mindestens 92%, bevorzugt mindestens 93 %, bevorzugt mindestens 94 %, bevorzugt mindestens 95 %, bevorzugt mindestens 96 %, bevorzugt mindestens 97 %, bevorzugt mindestens 98 %, bevorzugt mindestens 99 %, auf.

In einer besonders bevorzugten Ausführungsform der vorliegenden Erfindung wird mittels des erfindungsgemäßen Verfahrens eine Hartkaramelle mit einer Wiederfindungsrate von mindestens 90 %, bevorzugt mindestens 91 %, bevorzugt mindestens 92 %, bevorzugt mindestens 93 %, bevorzugt mindestens 94 %, bevorzugt mindestens 95 %, bevorzugt mindestens 96 %, bevorzugt mindestens 97 %, bevorzugt mindestens 98 %, bevorzugt mindestens 99 % Trehalulose hergestellt.

In einer besonders bevorzugten Ausführungsform der vorliegenden Erfindung wird mittels des erfindungsgemäßen Verfahrens eine Hartkaramelle mit einer Wiederfindungsrate von mindestens 90 %, bevorzugt mindestens 91 %, bevorzugt mindestens 92 %, bevorzugt mindestens 93 %, bevorzugt mindestens 94 %, bevorzugt mindestens 95 %, bevorzugt mindestens 96 %, bevorzugt mindestens 97 %, bevorzugt mindestens 98 %, bevorzugt mindestens 99 % Isomaltulose hergestellt.

Im Zusammenhang mit der vorliegenden Erfindung sind Gew.-% Angaben bezogen auf die Gesamttrockensubstanz der Hartkaramelle, falls nichts anderes angegeben ist.

Im Zusammenhang mit der vorliegenden Erfindung wird unter einem wässrigen Medium enthaltend eine Trehalulose-haltige Zusammensetzung verstanden, dass eine Trehalulose-haltige Zusammensetzung in einem Medium, insbesondere einem Lösungsmittel vorhanden ist, beispielsweise in Form eines wässrigen Mediums, das heißt eines wässrigen Lösemittels, wobei das wässrige Medium in Form eines Sirups oder einer Lösung vorliegen kann. Das wässrige Medium kann in bevorzugter Ausführungsform Wasser sein.

In einer besonders bevorzugten Ausführungsform kann das wässrige Medium eine aus einer enzymatischen Umsetzung von Saccharose-haltigen Lösungen, insbesondere eine aus enzymatisch katalysierter Isomerisierung von Saccharose-haltigen Zusammensetzungen unter Einsatz einer α-Glucosyltransferase, insbesondere unter Einsatz von *Pseudomonas mesoacidophila,* erhaltene Trehalulose-haltige Zusammensetzung sein, insbesondere ein unmittelbar aus einer enzymatischen Umsetzung resultierendes Reaktionsgemisch, vorzugsweise nach gegebenenfalls erfolgender Aufreinigung unter Einsatz von zum Beispiel Ionenaustauschern und/oder Invertasebehandlungen.

In einer Ausführungsform der vorliegenden Erfindung ist das in Verfahrensschritt a) bereitgestellte wässrige Medium ein wässriges Medium, das unmittelbar nach einer enzymkatalysierten, insbesondere α-Glucosyltransferase-katalysierten, Isomerisierung einer Saccharose-haltigen Zusammensetzung zu einer Trehalulose-haltigen Zusammensetzung oder durch anschließende Aufreinigung mittels Ionenaustauscher und/oder Invertasebehandlung erhalten wurde. In einer weiteren Ausführungsform kann einem solchen wässrigen Medium neben der genannten Trehalulose-haltigen Zusammensetzung mindestens ein Zusatz- oder Hilfsstoff hinzugefügt werden.

Der Begriff "Hartkaramelle" bezeichnet im Zusammenhang mit der vorliegenden Erfindung ein im Wesentlichen amorphes, glasartiges Produkt.

Im Zusammenhang mit der vorliegenden Erfindung wird unter einer "plastischen Masse" eine verformbare Masse bezeichnet.

Der Begriff "Abkühlen" bezeichnet im Zusammenhang mit der vorliegenden Erfindung eine Verringerung der Temperatur. Dabei umfasst der Begriff sowohl ein aktives Abkühlen, insbesondere durch den aktiven Entzug von Wärmeenergie, als auch ein passives Abkühlen, insbesondere ein "abkühlen lassen".

Im Zusammenhang mit der vorliegenden Erfindung wird unter dem Begriff "Disaccharid" ein Kohlenhydrat verstanden, das aus zwei Monosacchariden aufgebaut ist, wobei die beiden Monosaccharide über eine glykosidische Bindung miteinander verbunden sind.

Unter einem "Oligosaccharid" wird erfindungsgemäß ein Kohlenhydrat verstanden, das aus drei bis zehn Monosacchariden aufgebaut ist, wobei die einzelnen Monosaccharide über glykosidische Bindungen miteinander verbunden sind.

Der Begriff "Polysaccharid" bezeichnet erfindungsgemäß ein Kohlenhydrat, das aus mehr als zehn Monosacchariden aufgebaut ist, wobei die einzelnen Monosaccharide über glykosidische Bindungen miteinander verbunden sind.

Unter "Wiederfindung" wird im Zusammenhang mit der vorliegenden Erfindung der prozentuale Anteil eines Stoffes, insbesondere der prozentuale Anteil der in der ursprünglich eingesetzten Trehalulose-haltigen Zusammensetzung enthaltenen Kohlenhydrate, bevorzugt der prozentuale Anteil der in der ursprünglich eingesetzten Trehalulose-haltigen Zusammensetzung enthaltenen Trehalulose und Isomaltulose, verstanden, der nach Durchführung des erfindungsgemäßen Verfahrens, insbesondere nach Herstellung der erfindungsgemäßen Hartkaramelle, chemisch unverändert in der Hartkaramelle vorliegt. Demnach bedeutet eine hohe "Wiederfindung", dass während des Herstellungsverfahrens keine oder nur eine geringe chemische Veränderung der betreffenden Stoffe, insbesondere der in der ursprünglich eingesetzten Trehalulose-haltigen Zusammensetzung enthaltenen Kohlenhydrate, bevorzugt der in der ursprünglich eingesetzten Trehalulose-haltigen Zusammensetzung enthaltene Trehalulose und Isomaltulose, stattgefunden hat, insbesondere dass nur ein geringer Anteil der ursprünglich in dem Verfahren eingesetzten Stoffe chemisch verändert wurde und der überwiegende Anteil der Stoffe chemisch unverändert in der Hartkaramelle vorliegt.

Im Zusammenhang mit der vorliegenden Erfindung wird unter den Begriffen "umfassend" und "aufweisend" verstanden, dass zusätzlich zu den von diesen Begriffen explizit erfassten Elementen noch weitere, nicht explizit genannte Elemente hinzutreten können. Im Zusammenhang mit der vorliegenden Erfindung wird unter diesen Begriffen auch verstanden, dass allein die explizit genannten Elemente erfasst werden und keine weiteren Elemente vorliegen. In dieser besonderen Ausführungsform ist die Bedeutung der Begriffe "umfassend" und "aufweisend" gleichbedeutend mit dem Begriff "bestehend aus". Darüber hinaus erfassen die Begriffe "umfassend" und "aufweisend" auch Zusammensetzungen, die neben den explizit genannten Elementen auch weitere nicht genannte Elemente enthalten, die jedoch von funktionell und qualitativ ungeordneter Natur sind. In dieser Ausführungsform sind die Begriffe "umfassend" und "aufweisend" gleichbedeutend mit dem Begriff "im Wesentlichen bestehend aus".

Unter dem Begriff "und/oder" wird im Zusammenhang mit der vorliegenden Erfindung verstanden, dass alle Mitglieder einer Gruppe, welche durch den Begriff "und/oder" verbunden sind, sowohl alternativ zueinander als auch jeweils untereinander kumulativ in einer beliebigen Kombination offenbart sind. Dies bedeutet für den Ausdruck "a), b) und/oder c)", dass folgender Offenbarungsgehalt darunter zu verstehen ist: a), a) oder b) oder c) oder b) (a) und b) oder c) (a) und c) oder d) (b) und c) oder e) (a) und b) und c).

Sofern im Zusammenhang mit der vorliegenden Erfindung ein Wert für einen Druck angegeben wird, ist dieser als absoluter Druck und nicht als relativer Druck zum Atmosphärendruck zu verstehen. Ein Unterdruck ist ein Druck, welcher niedriger als der vorherrschende Atmosphärendruck (1 Bar) ist.

Sofern im Zusammenhang mit der vorliegenden Erfindung für eine Zahl die erste und zweite Nachkommastelle oder die zweite Nachkommastelle nicht angegeben sind/ist, sind/ist diese als Null zu setzen.

Sofern im Zusammenhang mit der vorliegenden Erfindung quantitative Angaben, insbesondere Prozentangaben, von Komponenten eines Produktes oder einer Zusammensetzung angegeben sind, addieren diese, sofern nicht explizit anders angegeben oder fachmännisch ersichtlich, zusammen mit den anderen explizit angegebenen oder fachmännisch ersichtlichen weiteren Komponenten der Zusammensetzung oder des Produktes auf 100 % der Zusammensetzung und/oder des Produktes auf.

Sofern im Zusammenhang mit der vorliegenden Erfindung ein "Vorhandensein", ein "Enthalten" oder ein "Aufweisen" einer Komponente in einer Menge von 0 Gew.-% ausdrücklich erwähnt oder impliziert wird, bedeutet dies, dass die jeweilige Komponente nicht in messbarer Menge vorhanden, insbesondere nicht vorhanden ist.

Weitere bevorzugte Ausführungsformen der vorliegenden Erfindung ergeben sich aus den Unteransprüchen.

Die Erfindung wird nachstehend ohne Beschränkung des allgemeinen Erfindungsgedankens anhand der Ausführungsbeispiele beschrieben.

### Beispiel 1

Es wurden 4 kg eines Vitalose^{®}-Sirups als wässriges Medium, enthaltend eine Trehalulose-haltige Zusammensetzung in Wasser mit einem Trockensubstanzgehalt von 69,56 Gew.-% (bezogen auf die Gesamtmasse des Vitalose^{®}-Sirups) und mit einem Gehalt an 0,62 Gew.-% Fructose, 0,63 Gew.-% Glucose, 0,26 Gew.-% Saccharose, 0,03 Gew.-% Turanose, 1,13 Gew.-% Leucrose, 76,2 Gew.-% Trehalulose, 20,4 Gew.-% Isomaltulose, 0,31 Gew.-% Isomaltose, 0,04 Gew.-% Raffinose, 0,01 Gew.-% DP1 (weitere unbestimmte monomere Zuckereinheiten) und 0,04 Gew.-% DP2 (weitere unbestimmte dimere Zuckereinheiten) (jeweils bezogen auf Gesamttrockensubstanz des Sirups, bestimmt mittels Gaschromatographie, GC), in einem Satzkocher eingewogen (Verfahrensschritt a)) und unter Durchmischung bis 100 °C bei atmosphärischen Druck aufgeheizt (Verfahrensschritt a1)). Die so bereitgestellte wässrige Suspension einer Trehalulose-haltigen Zusammensetzung (Vitalose^{®}) wurde anschließend bei einem Druck von 0,3 bar auf 125 °C erhitzt (Verfahrensschritt b)). Anschließend wurde der Unterdruck aufgehoben, der Satzkocher entleert und die erhaltene gekochte, plastische Masse auf einem Stahltisch auf 70 bis 80 °C abgekühlt (Verfahrensschritt c)).

Anschließend wurde die gekochte Masse auf einer Walze zu Hartkaramellen geprägt (Verfahrensschritt d)).

### Beispiel 2

**Tabelle 1:**

| Rezepturen | | | | | |
|---|---|---|---|---|---|
| **Versuch** | **Bezeichnung** | **Glucosesirup** | **Vitalose^{®}** | **Saccharose** | **zugegebenes Wasser** |
| **1** | Referenz | 2367 | | 2367 | 500 |
| **2** | ca. 50% Vitalose^{®} | | 1400 | 1308 | 200 |
| | ca. 50% Sacch. | | | | |
| **3** | 80% Vitalose^{®} | | 2400 | 600 | 0 |
| | 20% Sacch. | | | | |
| **4** | 100% Vitalose^{®} | | 3650 | 0 | 0 |

Die Menge an Zutaten ist in Gramm angegeben und %-Angaben sind bezogen auf die Gesamtmasse der im Versuch hergestellten Hartkaramelle.

**Tabelle 2:**

| Herstellung | | | | | | |
|---|---|---|---|---|---|---|
| **Versuch** | **Bezeichnung** | **Max. T [°C]** | **Druck [bar]** | **Dauer [min]** | **Wasser-gehalt** | **Isomaltulose und Trehalulose Wiederfindung** |
| **1** | Referenz | 140 | 0,2 | 25 | 1,9% | |
| **2** | ca. 50% Vitalose^{®} | 125 | 0,3 | 10 | 1,9% | 100% |
| | ca. 50% Sacch. | | | | | |
| **3** | 80% Vitalose^{®} | 125 | 0,3 | 9 | 2,2% | 100% |
| | 20% Sacch. | | | | | |

| **Versuch** | **Bezeichnung** | **Max. T [°C]** | **Druck [bar]** | **Dauer [min]** | **Wassergehalt** | **Isomaltulose und Trehalulose Wiederfindung** |
|---|---|---|---|---|---|---|
| **4** | 100% Vitalose^{®} | 127 | 0,3 | 9 | 2,2% | 100 % |

Die in der Tabelle 1 angegebenen Hartkaramellen wurden gemäß des in Beispiel 1 angegebenen Verfahrens mit der in der Tabelle 2 angegebenen Temperatur, Druck und Dauer des Verfahrensschritts b) hergestellt. Als Trehalulose-haltige Zusammensetzung wurde die in Beispiel 1 genannte Vitalose^{®} verwendet.

Versuch 1 ist ein nicht erfindungsgemäßer Referenzversuch.

Wie aus der Tabelle 1 ersichtlich wurde der Vitalose^{®} in Versuchen 2 und 3 entsprechende Mengen an Saccharose und/oder Wasser hinzugegeben.

Der angegebene Wassergehalt in der Tabelle 2 ist der Wassergehalt der in Verfahrensschritt d) erhaltenen Hartkaramelle.

Die erfindungsgemäßen Versuche zeigten eine hohe Wiederfindung (siehe Tabelle 2) sowohl an Isomaltulose als auch Trehalulose in der Hartkaramelle, wobei die erhaltene plastische Masse sehr gut verarbeitbar und prägbar war und keine Kristallisationsneigung zeigte.

## Patentansprüche

1. Verfahren zur Herstellung einer eine Trehalulose-haltige Zusammensetzung enthaltenden Hartkaramelle, umfassend die Schritte:
a) Bereitstellung eines wässrigen Mediums, enthaltend eine Trehalulose-haltige Zusammensetzung in einer Menge von 50 bis 100 Gew.-%, bezogen auf die Gesamttrockensubstanz, umfassend 5 bis 50 Gew.-% Isomaltulose und 20 bis 95 Gew.-% Trehalulose, jeweils bezogen auf die Trockensubstanz der Trehalulose-haltigen Zusammensetzung,
b) Anlegen eines reduzierten Drucks von höchstens 0,4 bar unter Durchmischung bei einer Temperatur von höchstens 135 °C, insbesondere höchstens 130 °C,
c) Abkühlen des wässrigen Mediums auf eine Temperatur von 70 bis 90 °C bei atmosphärischem Druck zum Erhalt einer plastischen Masse und
d) Formen der in Schritt c) erhaltenen plastischen Masse und Erhalten einer eine Trehalulose-haltigen Zusammensetzung enthaltenden Hartkaramelle.

2. Verfahren nach Anspruch 1, wobei das in Schritt a) bereitgestellte wässrige Medium eine Trehalulose-haltige Zusammensetzung in einer Menge von 50 bis 100 Gew.-%, bezogen auf die Gesamttrockensubstanz, umfassend 15 bis 25 Gew.-% Isomaltulose und 75 bis 85 Gew.-% Trehalulose, jeweils bezogen auf die Trockensubstanz der Zusammensetzung, aufweist.

3. Verfahren nach Anspruch 1 oder 2, wobei das in Schritt a) bereitgestellte wässrige Medium vor Schritt b) in einem Verfahrensschritt a1) auf eine Temperatur von 80 bis 100 °C, bevorzugt 85 bis 95 °C, erhitzt wird.

4. Verfahren nach einem der vorherigen Ansprüche, wobei in Schritt b) die Temperatur 120 bis 135 °C, bevorzugt 125 bis 135 °C, beträgt.

5. Verfahren nach einem der vorherigen Ansprüche, wobei die Durchmischung in Schritt b) kontinuierlich erfolgt.

6. Verfahren nach einem der vorherigen Ansprüche, wobei das wässrige Medium in Schritt a) mindestens ein Süßungsmittel ausgewählt aus der Gruppe bestehend aus Saccharose, Fructose, Glukose, Isomalt oder eine Mischung davon in einer Menge von höchstens 50 Gew.-%, bezogen auf die Gesamttrockensubstanz aufweist.

7. Hartkaramelle, enthaltend 50 bis 98 Gew.-%, bezogen auf die Gesamttrockensubstanz der Hartkaramelle einer Trehalulose-haltigen Zusammensetzung, umfassend 5 bis 50 Gew.-% Isomaltulose und 20 bis 95 Gew.-% Trehalulose, jeweils bezogen auf die Trockensubstanz der Zusammensetzung, hergestellt durch ein Verfahren gemäß einem der Ansprüche 1 bis 6 und wobei die Hartkaramelle einen Restwassergehalt im Bereich von 1,5 bis 3 Gew.-%, bevorzugt 1,9 bis 2,6 Gew.-%, bezogen auf Gesamtgewicht der Hartkaramelle, aufweist, und wobei die Trehalulose-haltige Zusammensetzung in der Hartkaramelle nicht kristallin vorliegt.

8. Hartkaramelle nach Anspruch 7, wobei die Hartkaramelle 50 bis 98 Gew.-%, bezogen auf die Gesamttrockensubstanz der Hartkaramelle einer Trehalulose-haltigen Zusammensetzung, umfassend 15 bis 25 Gew.-% Isomaltulose und 75 bis 85 Gew.-% Trehalulose, jeweils bezogen auf die Trockensubstanz der Zusammensetzung, enthält.

9. Hartkaramelle nach Anspruch 7 oder 8, wobei die Hartkaramelle mindestens ein Süßungsmittel ausgewählt aus der Gruppe bestehend aus Saccharose, Fructose, Glukose, Isomalt oder eine Mischung davon in einer Menge von höchstens 55 Gew.-%, bezogen auf die Gesamttrockensubstanz der Hartkaramelle, aufweist.

10. Hartkaramelle nach einem der Ansprüche 7 bis 9, wobei die Hartkaramelle transparent ist.

## Claims

1. A process for preparing a hard caramel containing a trehalulose-containing composition, comprising the steps of:
a) providing an aqueous medium containing a trehalulose-containing composition in an amount of 50 to 100 wt.%, based on the total dry substance, comprising 5 to 50 wt.% isomaltulose and 20 to 95 wt.% trehalulose, each based on the dry substance of the trehalulose-containing composition,
b) applying a reduced pressure of at most 0.4 bar with mixing at a temperature of at most 135 °C, in particular at most 130 °C,
c) cooling the aqueous medium to a temperature of 70 to 90 °C at atmospheric pressure to obtain a plastic mass and
d) moulding the plastic mass obtained in step c) and obtaining a hard caramel containing a trehalulose-containing composition.

2. The process of claim 1, wherein the aqueous medium provided in step a) has a trehalulose-containing composition in an amount of 50 to 100 wt.%, based on the total dry substance, comprising 15 to 25 wt.% isomaltulose and 75 to 85 wt.% trehalulose, each based on the dry substance of the composition.

3. The process of claim 1 or 2, wherein the aqueous medium provided in step a) is heated to a temperature of 80 to 100 °C, preferably 85 to 95°C, before step b) in a process step a1).

4. The process of any one of the preceding claims, wherein the temperature is 120 to 135 °C, preferably 125 to 135 °C in step b).

5. The process of any one of the preceding claims, wherein the mixing in step b) is continuous.

6. The process of any one of the preceding claims, wherein the aqueous medium in step a) has at least one sweetener selected from the group consisting of sucrose, fructose, glucose, isomalt or a mixture thereof in an amount of at most 50 wt.%, based on the total dry substance.

7. A hard caramel containing 50 to 98 wt.%, based on the total dry substance of the hard caramel, of a trehalulose-containing composition comprising 5 to 50 wt.% isomaltulose and 20 to 95 wt.% trehalulose, each based on the dry substance of the composition, prepared by a process according to any one of claims 1 to 6 and wherein the hard caramel has a residual water content in the range of 1.5 to 3 wt.%, preferably 1.9 to 2.6 wt.%, based on total weight of the hard caramel, and wherein the trehalulose-containing composition is not present crystalline in the hard caramel.

8. The hard caramel of claim 7, wherein the hard caramel contains 50 to 98 wt.%, based on the total dry substance of the hard caramel, of a trehalulose-containing composition comprising 15 to 25 wt.% isomaltulose and 75 to 85 wt.% trehalulose, each based on the dry substance of the composition.

9. The hard caramel of claim 7 or 8, wherein the hard caramel has at least one sweetener selected from the group consisting of sucrose, fructose, glucose, isomalt or a mixture thereof in an amount of at most 55 wt.%, based on the total dry substance of the hard caramel.

10. The hard caramel of any one of claims 7 to 9, wherein the hard caramel is transparent.

## Revendications

1. Procédé de préparation d'un caramel dur contenant une composition contenant du tréhalulose, comprenant les étapes :
a) mise à disposition d'un milieu aqueux, contenant une composition contenant du tréhalulose, en une quantité de 50 à 100% en poids, par rapport à la matière sèche totale, comprenant 5 à 50% en poids d'isomaltulose et 20 à 95% en poids de tréhalulose, à chaque fois par rapport à la matière sèche de la composition contenant du tréhalulose,
b) application d'une pression réduite d'au plus 0,4 bar tout en mélangeant à une température d'au plus 135°C, en particulier d'au plus 130°C,
c) refroidissement du milieu aqueux à une température de 70 à 90°C à pression atmosphérique afin d'obtenir une masse plastique et
d) moulage de la masse plastique obtenue dans l'étape c) et obtention d'un caramel dur contenant une composition contenant du tréhalulose.

2. Procédé selon la revendication 1, le milieu aqueux mis à disposition dans l'étape a) présentant une composition contenant du tréhalulose, en une quantité de 50 à 100% en poids, par rapport à la matière sèche totale, comprenant 15 à 25% en poids d'isomaltulose et 75 à 85% en poids de tréhalulose, à chaque fois par rapport à la matière sèche de la composition.

3. Procédé selon la revendication 1 ou 2, le milieu aqueux mis à disposition dans l'étape a) étant chauffé avant l'étape b), dans une étape de procédé a1, à une température de 80 à 100°C, de préférence de 85 à 95°C.

4. Procédé selon l'une des revendications précédentes, où, dans l'étape b), la température est de 120 à 135°C, de préférence de 125 à 135°C.

5. Procédé selon l'une des revendications précédentes, le mélange dans l'étape b) ayant lieu de manière continue.

6. Procédé selon l'une des revendications précédentes, le milieu aqueux dans l'étape a) présentant au moins un édulcorant choisi dans le groupe constitué par le saccharose, le fructose, le glucose, l'isomalt ou un mélange de ceux-ci en une quantité d'au plus 50% en poids, par rapport à la matière sèche totale.

7. Caramel dur, contenant 50 à 98% en poids, par rapport à la matière sèche totale du caramel dur, d'une composition contenant du tréhalulose comprenant 5 à 50% en poids d'isomaltulose et 20 à 95% en poids de tréhalulose, à chaque fois par rapport à la matière sèche de la composition, préparé par un procédé selon l'une des revendications 1 à 6 et le caramel dur présentant une teneur résiduelle en eau dans la plage de 1,5 à 3% en poids, de préférence de 1,9 à 2,6% en poids, par rapport au poids total du caramel dur et la composition contenant du tréhalulose ne se trouvant pas sous forme cristalline dans le caramel dur.

8. Caramel dur selon la revendication 7, le caramel dur contenant 50 à 98% en poids, par rapport à la matière sèche totale du caramel dur, d'une composition contenant du tréhalulose comprenant 15 à 25% en poids d'isomaltulose et 75 à 85% en poids de tréhalulose, à chaque fois par rapport à la matière sèche de la composition.

9. Caramel dur selon la revendication 7 ou 8, le caramel dur présentant au moins un édulcorant choisi dans le groupe constitué par le saccharose, le fructose, le glucose, l'isomalt ou un mélange de ceux-ci en une quantité d'au plus 55% en poids, par rapport à la matière sèche totale du caramel dur.

10. Caramel dur selon l'une des revendications 7 à 9, le caramel dur étant transparent.
